# EUROPEAN PATENT SPECIFICATION

(11) **EP 3 289 488 B1**
(45) Date of publication and mention of the grant of the patent: **18.03.2020**
(21) Application number: 16721323.0
(22) Date of filing: 27.04.2016
(51) Int. Cl.: G06F 16/9537

(54) **NAVIGATION WITH CONTEXTUAL INFORMATION**
NAVIGATION MIT KONTEXTINFORMATIONEN
NAVIGATION AVEC DES INFORMATIONS CONTEXTUELLES

(30) Priority: 29.04.2015 US 201514700091
(43) Date of publication of application: 07.03.2018
(73) Proprietor: Microsoft Technology Licensing LLC, Redmond, Washington 98052-6399 (US)
(72) Inventor: HOROVITZ, Dvir, Redmond, Washington 98052-6399 (US); HALITSYN, Viktor, Redmond, Washington 98052-6399 (US); KANAKAPALLY, Srinivas, Redmond, Washington 98052-6399 (US); DANDAWATE, Priya, Redmond, Washington 98052-6399 (US)
(74) Representative: Goddar, Heinz J.
(86) International application number: PCT/US2016/029403
(87) International publication number: WO 2016/176228

(56) References cited:
- US-A1- 2010 122 208
- US-A1- 2010 220 174
- US-A1- 2011 279 446

## Description

### BACKGROUND

Many applications provide users with maps and street-level images. A user is shown a map, and the application provides the user the opportunity to view street-level images of some location shown on the map. In order to access the street-level images, the user normally identifies a point on the map. Upon receiving this identification of a point on the map, the application changes the display so that the map is replaced with a street-level image of the point chosen, along with an inset map, or other small map, that shows an overhead view of where the user is. The inset map, or other small map, is a different map from the one that was being displayed before the user chose to view street-level images. US 2010/0220174A1 teaches a method for providing an interactive mapping and panoramic imaging application.

### SUMMARY

The invention is defined by the features of the independent claims. Further embodiments are the subject-matter of the dependent claims. A user may use an application to locate points on a map. Contextual information may be added to the map that is shown to the user, such as locations that are in the user's contacts list, or locations that are in the user's favorites list, or locations that were identified as a result of a geographic search. While the user is viewing the map, the user may indicate a location on the map at which the user would like to see a street-level image. The application then changes the display to show street-level images instead of the map, and also includes a small map which shows an overhead view of the area that contains the street-level image. The small map may contain some of the area that was shown in the original map that the user was viewing prior to being shown street-level images. Contextual information pertaining to the user or to prior user activity may be added to the small map. For example, the small map may show locations of the user's contacts or favorites, or may show the locations of recent search results. These locations may be indicated on the small map by a graphic of a pin, a balloon, a flag, or some other type of marker. The user may jump from one street-level image to another by indicating the markers shown on the small map, thereby allowing the user to see street-level images of the places on the map that are associated with the contextual information.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

FIGS. 1-3 are block diagrams of example application interfaces.
FIGS. 4-5 are a flow diagram of an example process in which maps may be viewed.
FIG. 6 is a block diagram of example components that may be used in connection with implementations of the subject matter described herein.

### DETAILED DESCRIPTION

Many applications provide users with maps and street-level images. A map may be presented to the user, and the user may request to view street-level images of locations on the map. For example, the user may click on a particular point on the map, or drag an icon of a pedestrian onto a point on the map, or may otherwise indicate a place at which street-level images are to be shown. The application may then display a street level image of the requested location. In order to allow the user to maintain his or her bearings while looking at the street-level images, the application may also show the user a map of the location at the same time that the street-level image of that location is being shown. Since the street-level image is likely to take up much of the display on the user's device, the original map that the user was viewing is not shown; instead, a smaller map is show with the street-level images. The small map is not the same as the original map, and thus may not contain the same information as the original map.

In particular, applications that show maps often place information from the user's context on the map. For example, the user may have performed a search, and may have a list of contacts and/or a list of favorite places. When search results, contacts, or favorites are located within the viewing area of a map, a map application may identify these items on the map - e.g., by placing markers at the locations associated with the items. However, since the small map that is shown with the street-level images is different from the original map, this context information may be lost when the original map is replaced on the display with a small map plus street-level images.

The subject matter herein displays contextual information on a small map that is shown with street-level images, thereby allowing a user to view this contextual information while viewing street-level images. Markers may be placed on the small map showing contextual information, such as prior search results, contacts, or favorites. The user may move from marker to marker by clicking, tapping, or otherwise indicating the marker. When the user clicks on a marker, the street-level view is changed from the current image to an image associated with the location of the marker that the user has indicated. A particular image is shown to a user at a particular angle, where the image and the angle are chosen to represent the location indicated by the user. The image and angle may be chosen based on factors such as which image contains the least blockage of the location to be shown, any user information about that image, and/or any information about where within an image the selected location appears.

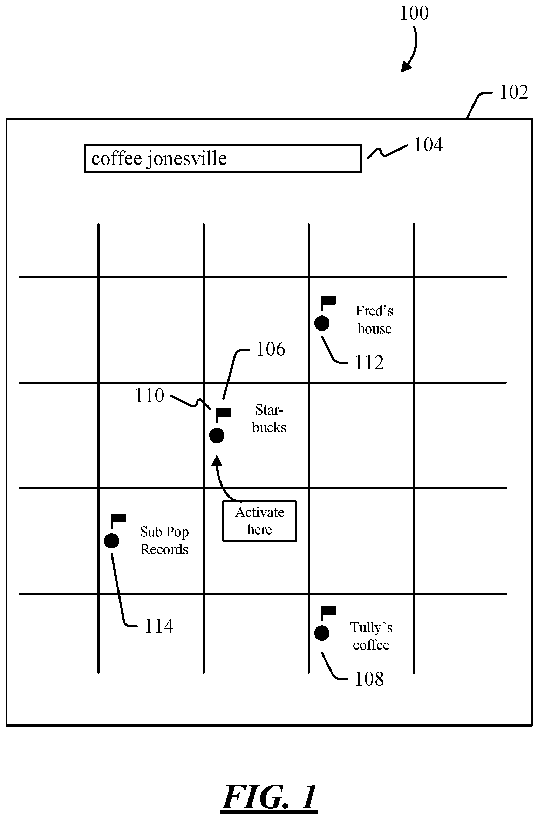

Turning now to the drawings, FIG. 1 shows an example application interface 100, which includes a map 102. The application shown in FIG. 1 is a geographic search application, although any other type of application in which a map is part of the interface may be used. Examples of such other applications include restaurant review applications, travel reservation applications, encyclopedia applications, etc. In addition to map 102, application interface 100 may include a search box 104, which may be used to enter a query. In the example shown, the query is "coffee jonesville", which may be interpreted as a request to search for a coffee shop or coffee house in a city named Jonesville. The results of this search are shown on map 102. Those results include locations 106 and 108, which are Starbucks and Tully's Coffee, respectively. Each location is indicated by a marker, such as marker 110. The markers in FIG. 1 are depicted as flags, although any other types of markers (e.g., push pins, balloons, etc.) may be used.

In addition to showing the search results on map 102, the application also includes information specific to the user. For example, the user may have a list of contacts, and a person named Fred may be one of those contacts. If the address associated with Fred appears within the geographic region depicted by map 102, then Fred's house (location 112) may be shown on the map. Or, as another example, if the user has a list of "favorites", such locations may be shown on map 102 as well. For example, a user may have a favorites list that includes a business named Sub Pop Records. If that location appears in the geographic region depicted by map 102, then that business (location 114) may appear on map 102. Information such as search results and a user's contacts or favorites may be referred to as context information, or contextual information.

While viewing map 102, a user may click, tap, or otherwise activate a location on the map. In the example shown, the user activates location 106, which is Starbucks.

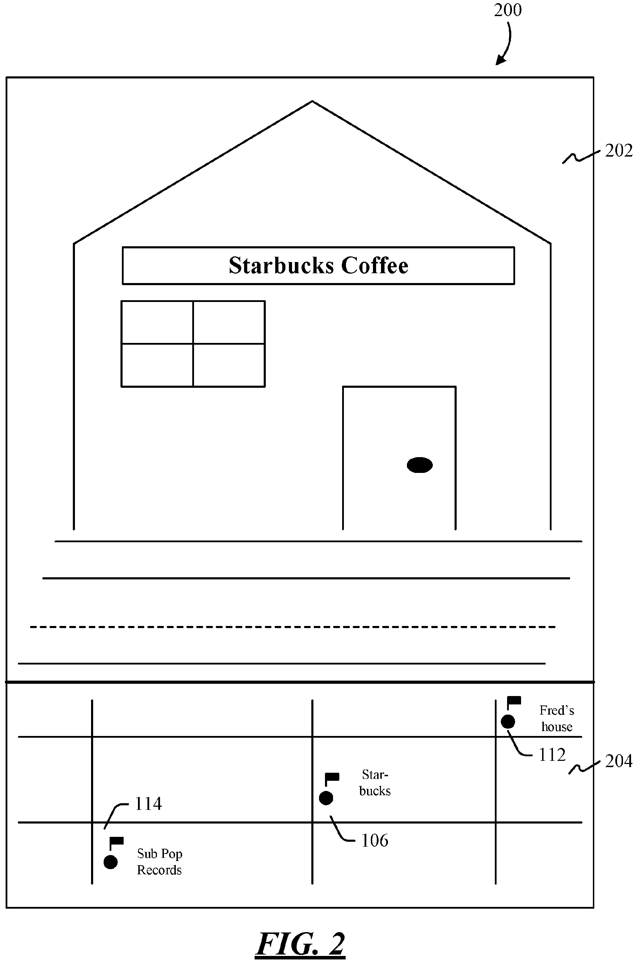

FIG. 2 shows an example interface 200 of the application described in connection with FIG. 1, after the user activates the Starbuck's location on map 102. By activating a location, the user indicates that the user wants to see street-level images of the indicated location. A street-level image 202 of Starbucks is therefore shown in interface 200. Additionally, a map 204 is shown, which includes the location 106 (Starbucks) whose street-level image is being shown. The showing of map 204 along with the street-level image allows the viewing user to orient himself or herself while viewing the street-level image.

Map 204 is a different map from map 102 (shown in FIG. 1). However, some or all of the contextual information from map 102 may be included in map 204. In the example of FIG. 2, map 204 covers a smaller region than map 102, so map 204 includes only those items of contextual information that are located in the region that map 204 depicts. In this example, Fred's house (location 112) and Sub Pop Records (location 114) are in the region depicted by map 204, so the locations of these items of contextual information are included in map 204. It is noted that showing these items of contextual information on map 204 may have the effect of reducing the number of times that a user has to request to see the original map 102 (shown in FIG. 1), which reduces the required amount of user-interaction with a computer or other device, and may also preserve the life of the computer or other device by reducing wear and tear on the device.

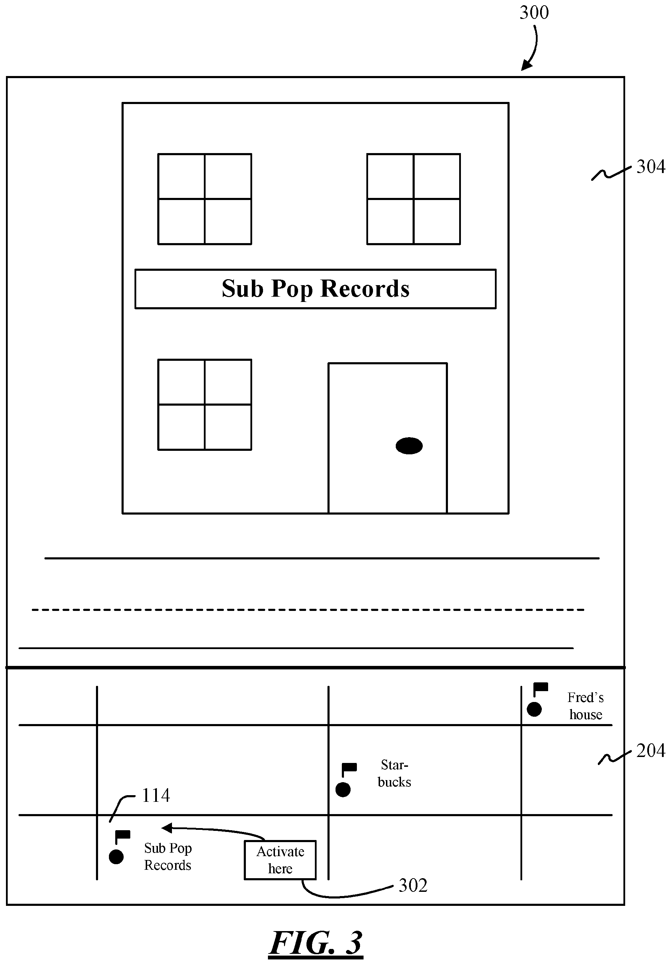

In FIG. 3, a user activates location 114 (as indicated by arrow 302), which causes the street-level image to change from the image 202 shown in FIG. 2) to image 304. In particular, location 114 is Sub Pop records, which is shown in the image-view area of interface 300 after the user activates location 114 on map 204. In this way, the user is able to switch from one street-level view to another without having to go back to map 102 (shown in FIG. 1), which may reduce interaction with the user's device, and, therefore, physical wear and tear on the device.

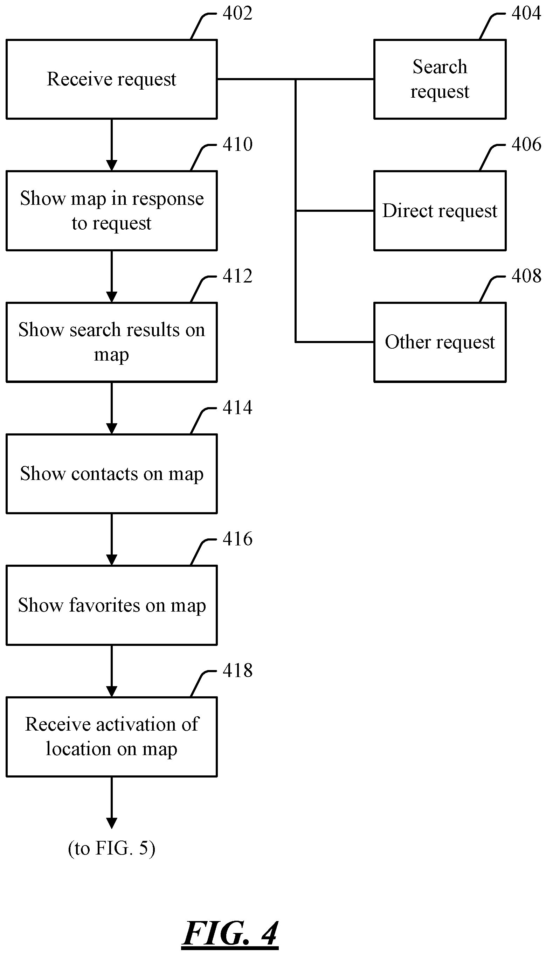

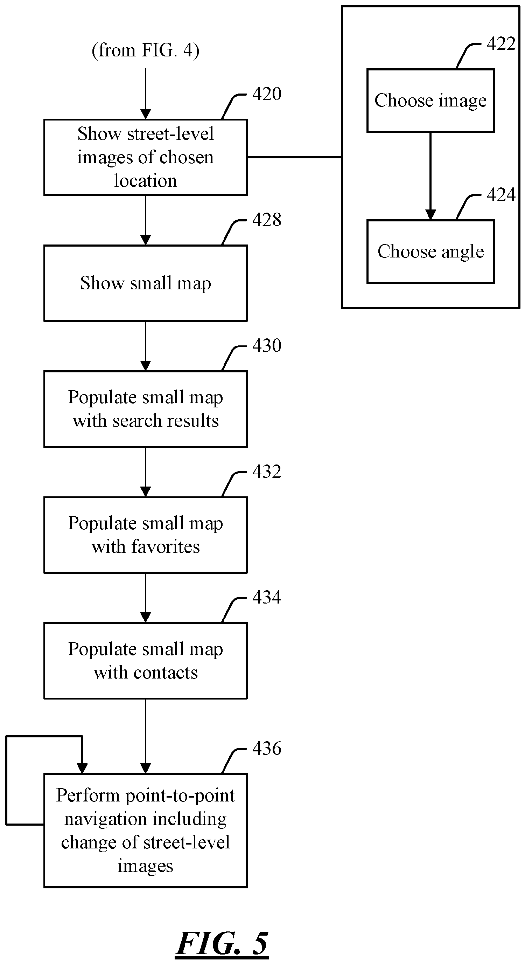

FIGS. 4 and 5 show an example process in which a user is shown a map and street-level images. At 402, a request of some kind is received. Any type of request may be received, as long a response to the request is the showing of a map to the user. Examples of such requests are search requests 404, direction requests 406 (i.e., requests to receive driving, walking, or public transit directions), or any other requests 408.

At 410, a map is shown in response to the request that was received at 402. Various items of contextual information may be shown on the map. For example, if the user has performed a search that resulted in showing a map, then any search results that are associated with a geographic location within the region depicted by the map may be shown on the map (block 412). Or, if any of the user's contacts and/or favorites are associated with locations that are within the region depicted by the map, then those contacts and/or favorites may also be shown on the map (blocks 414 and 416).

At 418, an activation of a location on the map may be received. Examples of activating a location include clicking on the location (or its on-screen marker) with a mouse or other pointing device, tapping on the location or its on-screen marker using a touch screen, using a laser pointer to indicate the location or its on-screen marker with a display technology that can receive indications by laser pointer, indicating location by audio commands, or any other type of input that indicates that a system interprets to mean that the user wishes to activate the location.

After the user activates a location, street-level images of the chosen location are shown at 420. Prior to showing the street-level images, the content of the display on the user's device may be dominated by a map. After the user activates a location, the content of that display may be replaced by the street-level images. The process of showing a street level image may include choosing an image (at 422) and choosing an angle at which to show the image (at 424). (Note that street-level images are often taken in cylindrical or dome views, and thus, from a given photograph, a particular angle is chosen to project a portion of the cylindrical or dome view image onto a flat or nearly-flat display.) The choice of image and/or angle may be made using user data and/or visual analysis (block 426). For example, suppose the location is a particular restaurant. Users may previously have expressed their opinions as to which image, and which angle of a particular image, accurately represent a view of the restaurant. These user-sourced, or crowd-sourced, data may be used to choose an image to be shown to the user and/or an angle at which the image is to be shown. This type of user data may be particularly helpful in the case where a location is not adequately identified by its street address, such as where the street address of a restaurant is actually the street address of a shopping mall in which the restaurant is located and the restaurant itself is located quite far from the street. In addition to user user-sourced or crowd sourced data, a system may use a visual analysis of the images to identify which images contain occlusions (e.g., cars or trucks in front of the location to be shown), which images are too blurry to show, or which images have poor lighting. These types of analyses may be made by machine rather than using user-sourced or crowd-sourced opinions, although such human-sourced information may supplement the machine analysis of the images.

At 428, a inset map or other small map is shown along with the street-level image. This small map is a distinct map from the map that was presented at 410, although both maps may having some overlap in the regions that they depict. At 430, 432, and 434, the small map may be populated with contextual information such as search results, favorites, and/or contacts. This contextual information that is shown on the small map be the same contextual information that was used to populate the map that had been presented at 410. It is noted that populating a second map with the some of the same contextual information that had been used to populate a first map is not the same as showing a copy of the first map on which the information had been populated. The maps that are shown at 410 and 428 are two separate maps that are populated with contextual information separately.

At 436, a user may perform point-to-point navigation, which includes changing of the street-level images. The activation of Sub Pop Records in FIG. 3, and the corresponding change of the street-level image from Starbucks (shown in FIG. 2) to Sub Pop Records (shown in FIG. 3), is an example of point-to-point navigation. When the user clicks a particular location from the contextual information that has been populated to the small map, the street-level view is changed from the image that had been previously shown to the image of the selected location. The process of performing point-to-point navigation may be repeated as many times as the user wants (as indicated by the arrow leading from block 436 to itself).

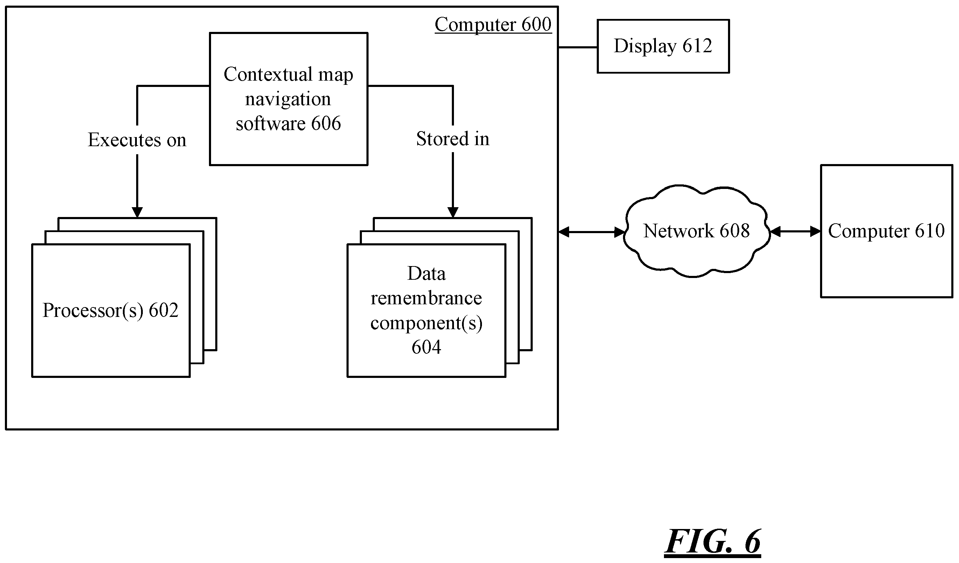

FIG. 6 shows an example environment in which aspects of the subject matter described herein may be deployed.

Computer 600 includes one or more processors 602 and one or more data remembrance components 604. Processor(s) 602 are typically microprocessors, such as those found in a personal desktop or laptop computer, a server, a handheld computer, a phone, a tablet, or another kind of computing device. Data remembrance component(s) 604 are components that are capable of storing data for either the short or long term. Examples of data remembrance component(s) 604 include hard disks, removable disks (including optical and magnetic disks), volatile and non-volatile random-access memory (RAM), read-only memory (ROM), flash memory, magnetic tape, etc. Data remembrance component(s) are examples of computer-readable storage media. Computer 600 may comprise, or be associated with, display 612, which may be a cathode ray tube (CRT) monitor, a liquid crystal display (LCD) monitor, or any other type of monitor.

Software may be stored in the data remembrance component(s) 604, and may execute on the one or more processor(s) 602. An example of such software is contextual map navigation software 606, which may implement some or all of the functionality described above in connection with FIGS. 1-5, although any type of software could be used. Software 606 may be implemented, for example, through one or more components, which may be components in a distributed system, separate files, separate functions, separate objects, separate lines of code, etc. A computer (e.g., personal computer, server computer, handheld computer, phone, tablet, etc.) in which a program is stored on hard disk, loaded into RAM, and executed on the computer's processor(s) typifies the scenario depicted in FIG. 6, although the subject matter described herein is not limited to this example.

The subject matter described herein can be implemented as software that is stored in one or more of the data remembrance component(s) 604 and that executes on one or more of the processor(s) 602. As another example, the subject matter can be implemented as instructions that are stored on one or more computer-readable media. Such instructions, when executed by a computer or other machine, may cause the computer or other machine to perform one or more acts of a method. The instructions to perform the acts could be stored on one medium, or could be spread out across plural media, so that the instructions might appear collectively on the one or more computer-readable media, regardless of whether all of the instructions happen to be on the same medium.

The term "computer-readable media" does not include signals per se; nor does it include information that exists solely as a propagating signal. It is noted that there is a distinction between media on which signals are "stored" (which may be referred to as "storage media"), and - in contradistinction - media that exclusively transmit propagating signals without storing the data that the signals represent. DVDs, flash memory, magnetic disks, etc., are examples of storage media. On the other hand, the fleeting, momentary physical state that a wire or fiber has at the instant that it is transmitting a signal is an example of a signal medium. (Wires and fibers can be part of storage media that store information durably, but information that exists only as the fleeting excitation of electrons in a wire, or only as the pulse of photons in a fiber, constitutes a signal.) It will be understood that, if the claims herein refer to media that carry information exclusively in the form of a propagating signal, and not in any type of durable storage, such claims will use the term "signal" to characterize the medium or media (e.g., "signal computer-readable media", or "signal device-readable media"). Unless a claim explicitly uses the term "signal" to characterize the medium or media, such claim shall not be understood to describe information that exists solely as a propagating signal or solely as a signal per se. Additionally, it is noted that "hardware media" or "tangible media" include devices such as RAMs, ROMs, flash memories, and disks that exist in physical, tangible form, and that store information durably; such "hardware media" or "tangible media" are not signals per se, are not propagating signals, and these terms do not refer media in which information exists exclusively as a propagating signal. Moreover, "storage media" are media that store information. The term "storage" is used to denote the durable retention of data. For the purpose of the subject matter herein, information that exists only in the form of propagating signals is not considered to be "durably" retained. Therefore, "storage media" include disks, RAMs, ROMs, etc., but does not include information that exists only in the form of a propagating signal because such information is not "stored."

Additionally, any acts described herein (whether or not shown in a diagram) may be performed by a processor (e.g., one or more of processors 602) as part of a method. Thus, if the acts A, B, and C are described herein, then a method may be performed that comprises the acts of A, B, and C. Moreover, if the acts of A, B, and C are described herein, then a method may be performed that comprises using a processor to perform the acts of A, B, and C.

In one example environment, computer 600 may be communicatively connected to one or more other devices through network 608. Computer 610, which may be similar in structure to computer 600, is an example of a device that can be connected to computer 600, although other types of devices may also be so connected.

In one example, the subject matter herein provides a computer-readable medium that stores executable instructions to provide street images to a user, where executable instructions, when executed by a computer, causing the computer to perform acts that comprise displaying a first map to a user on a display, the first map including user-specific context information; receiving, from the user, an indication that the user requests to see a street image of a first location shown on the map; displaying the street level image of the first location together with a second map on a single display, the second map being distinct from the first map; and showing the user-specific context information, or a portion of the user-specific context information, on the second map. The user specific context information may comprise results of a search performed by the user, items from a contacts list of the user, or businesses, entities, or locations from a list of favorites of the user. In one example, the user-specific context information may a second location, and the acts may further comprise receiving, from the user, an indication that the second location has been activated on the second map; and changing the display to show street images of the second location instead of the first location in response to the indication. In another example, the indication that the second location has been activated may comprise using a touch screen to tap on the second location, or on a marker associated with the second location, the second map being displayed on the touch screen, the touch screen being contained in a device that comprises the processor, activation of the second location on the second map allowing reduced use of the touch screen by avoiding the use of commands to return the display to the first map. In another example, the acts may further comprise choosing the street image, or an angle at which to view the street image, based on user-sourced data of the street image and visual analysis of the street image.

In another example, the subject matter herein may provide a method of providing street images to a user, where the method comprises using a processor to perform acts comprising displaying a first map to a user on a display, the first map including user-specific context information; receiving, from the user, an indication that the user requests to see a street image of a first location shown on the map; displaying the street image of the first location together with a second map on a single display, the second map being distinct from the first map; showing the user-specific context information on the second map, the user-specific context information including a second location; receiving, from the user, an indication that the second location has been activated on the second map; and changing the display to show street images of the second location instead of the first location in response to the indication. The user-specific context information may comprise results of a search performed by the user, items from a contacts list of the user, or businesses, entities, or locations from a list of favorites of the user. The second location may be activated by use of a pointing device to click on the second location on the second map, or on a marker associated with the second location on the second map. The second location may be activated by using a touch screen to tap on the second location, or on a marker associated with the second location, the second map being displayed on the touch screen, the touch screen being contained in a device that comprises the processor, activation of the second location on the second map allowing reduced use of the touch screen by avoiding the use of commands to return the display to the first map. In one example, the method may further comprise choosing the street image, or an angle at which to view the street image, based on user-sourced data of the street image and visual analysis of the street image.

In another example, the subject matter herein provides a system for providing street images to a user, where the system comprises a memory, a processor, a display, and a component that is stored in the memory, that executes on the processor, that displays a first map to a user on the display, the first map including user-specific context information, the component receiving, from the user, an indication that the user requests to see a street image of a first location shown on the map, the component displaying the street image of the first location together with a second map on the display, the second map being distinct from the first map, the component showing the user-specific context information on the second map, the user-specific context information including a second location, the component receiving, from the user, an indication that the second location has been activated on the second map, and the component changing the display to show street images of the second location instead of the first location in response to the indication. The user-specific context information may comprise results of a search performed by the user, items from a contacts list of the user, or businesses, entities, or locations from a list of favorites of the user. Activation of the second location may be made by use of a pointing device to click on the second location on the second map, or on a marker associated with the second location on the second map. Activation of the second location may be made using the touch screen to tap on the second location, or on a marker associated with the second location, the second map being displayed on the touch screen, activation of the second location on the second map allowing reduced use of the touch screen by avoiding the use of commands to return the display to the first map.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method of providing street images to a user comprising:
using a processor to perform acts comprising:
displaying (410) a first map (102) to a user on a display screen, said first map (102) including user-specific context information, wherein the said user-specific context information comprises items from a contacts list or favorite list of said user;
receiving (418), from the user, an indication that said user requests to see a street image of a first location shown on said first map (102);
choosing (422) said street image of first location from a plurality of images of the first location based on visual analysis of the plurality of street images of the first location, the visual analysis of the plurality of street images being conducted by the processor to identify at least one of occlusions in the images, level of blurriness of the images, and level of lighting of the images;
displaying (428) said street image of said first location together with a second map (204) on said display screen, said second map (204) being distinct from said first map (102);
showing said user-specific context information on said second map (204), said user-specific context information including a second location;
receiving, from said user, an indication that said second location has been activated on said second map (204); and
changing said display screen to show street images of said second location instead of said first location in response to said indication.

2. The method of claim 1, said user-specific context information comprising results of a search performed by said user.

3. The method of claim 1, said indication that said second location has been activated comprising use of a pointing device to click on said second location on said second map (204), or on a marker associated with said second location on said second map (204).

4. The method of claim 1, said indication that said second location has been activated comprising using a touch screen to tap on said second location, or on a marker associated with said second location, said second map (204) being displayed on said touch screen, said touch screen being contained in a device that comprises said processor, activation of said second location on said second map (204) allowing reduced use of said touch screen by avoiding the use of commands to return said display to said first map (102).

5. The method of claim 1, said acts further comprising:
choosing said street image, or an angle at which to view said street image, based on user-sourced data of said street image and visual analysis of said street image.

6. A system for providing street images to a user comprising:
a memory;
a processor;
a display; and
a component that is stored in said memory, that executes on said processor, that
displays a first map (102) to a user on said display, said first map (102) including user-specific context information, wherein the said user-specific context information comprises items from a contacts list or favorite list of said user,
said component receiving, from the user, an indication that said user requests to see a street image of a first location shown on said first map (102),
said component choosing said street image of first location from a plurality of images of the first location based on visual analysis of the plurality of street images of the first location, the visual analysis of the plurality of street images being conducted by the component to identify at least one of occlusions in the images, level of blurriness of the images, and level of lighting of the images;
said component displaying said street image of said first location together with a second map (204) on said display, said second map (204) being distinct from said first map (102),
said component showing said user-specific context information on said second map (204), said user-specific context information including a second location,
said component receiving, from said user, an indication that said second location has been activated on said second map (204), and
said component changing said display to show street images of said second location instead of said first location in response to said indication.

7. The system of claim 6, said user-specific context information comprising results of a search performed by said user.

8. The system of claim 6, said indication that said second location has been activated comprising use of a pointing device to click on said second location on said second map (204), or on a marker associated with said second location on said second map (204).

9. The system of claim 6, said display being a touch screen, said indication that said second location has been activated comprising using said touch screen to tap on said second location, or on a marker associated with said second location, said second map (204) being displayed on said touch screen, activation of said second location on said second map (204) allowing reduced use of said touch screen by avoiding the use of commands to return said display to said first map (102).

10. The system of claim 6, said component further choosing said street image, or an angle at which to view said street image, based on user-sourced data of said street image and visual analysis of said street image.

11. A computer-readable medium that stores executable instructions to provide street images to a user, the executable instructions, when executed by a computer, causing the computer to perform acts comprising:
displaying a first map (102) to a user on a display screen, said first map (102) including user-specific context information, wherein the said user-specific context information comprises items from a contacts list or favorite list of said user;
receiving, from the user, an indication that said user requests to see a street image of a first location shown on said first map (102);
choosing said street image of first location from a plurality of images of the first location based on visual analysis of the plurality of street images of the first location, the visual analysis of the plurality of street images being conducted by the processor to identify at least one of occlusions in the images, level of blurriness of the images, and level of lighting of the images;
displaying said street image of said first location together with a second map (204) on said display screen, said second map (204) being distinct from said first map (102);
showing said user-specific context information, or a portion of said user-specific context information, on said second map (204);
receiving, from said user, an indication that said second location has been activated on said second map (204); and
changing said display screen to show street images of said second location instead of said first location in response to said indication.

12. The computer-readable medium of claim 11, said user-specific context information comprising results of a search performed by said user.

13. The computer-readable medium of claim 11, said indication that said second location has been activated comprising use of a pointing device to click on said second location on said second map (204), or on a marker associated with said second location on said second map (204).

14. The computer-readable medium of claim 11, said indication that said second location has been activated comprising using a touch screen to tap on said second location, or on a marker associated with said second location, said second map (204) being displayed on said touch screen, said touch screen being contained in a device that comprises said processor, activation of said second location on said second map (204) allowing reduced use of said touch screen by avoiding the use of commands to return said display to said first map (102).

15. The computer-readable medium of claim 11, said acts further comprising:
choosing said street image, or an angle at which to view said street image, based on user-sourced data of said street image and visual analysis of said street image.

## Patentansprüche

1. Verfahren zum Bereitstellen von Straßenbildern für einen Benutzer, das Folgendes umfasst:
Verwenden eines Prozessors zum Ausführen von Schnitten, umfassend:
Anzeigen (410) einer ersten Karte (102) für einen Benutzer auf einem Bildschirm, wobei die erste Karte (102) benutzerspezifische Kontextinformationen aufweist, wobei die benutzerspezifischen Kontextinformationen Einträge aus einer Kontaktliste oder einer Favoritenliste des Benutzers umfassen;
Empfangen (418) einer Indikation von dem Benutzer, dass der Benutzer anfordert, ein Straßenbild eines ersten Standorts, der auf der ersten Karte (102) gezeigt ist, zu sehen;
Auswählen (422) des Straßenbilds des ersten Standorts aus einer Vielzahl von Bildern des ersten Standorts basierend auf einer visuellen Analyse der Vielzahl von Straßenbildern des ersten Standorts, wobei die visuelle Analyse der Vielzahl von Straßenbildern von dem Prozessor ausgeführt wird, um mindestens eines aus Okklusionen in den Bildern, einen Grad an Unschärfe in den Bildern und einen Grad an Beleuchtung der Bilder zu identifizieren;
Anzeigen (428) des Straßenbilds des ersten Standorts zusammen mit einer zweiten Karte (204) auf dem Bildschirm, wobei sich die zweite Karte (204) von der ersten Karte (102) unterscheidet;
Zeigen der benutzerspezifischen Kontextinformationen auf der zweiten Karte (204), wobei die benutzerspezifischen Kontextinformationen einen zweiten Standort aufweisen;
Empfangen einer Indikation von dem Benutzer, dass der zweite Standort auf der zweiten Karte (204) aktiviert wurde; und
Anpassen des Bildschirms, um Straßenbilder von dem zweiten Standort statt des ersten Standorts als Reaktion auf die Indikation zu zeigen.

2. Verfahren nach Anspruch 1, wobei die benutzerspezifischen Kontextinformationen Ergebnisse einer Suche umfassen, die von dem Benutzer durchgeführt wird.

3. Verfahren nach Anspruch 1, wobei die Indikation, dass der zweite Standort aktiviert wurde, eine Verwendung einer Zeigevorrichtung umfasst, um auf den zweiten Standort auf der zweiten Karte (204) oder auf eine Markierung zu klicken, die dem zweiten Standort auf der zweiten Karte (204) zugeordnet ist.

4. Verfahren nach Anspruch 1, wobei die Indikation, dass der zweite Standort aktiviert wurde, ein Verwenden eines berührungsempfindlichen Bildschirms umfasst, um den zweiten Standort oder eine Markierung anzutippen, die dem zweiten Standort zugeordnet ist, wobei die zweite Karte (204) auf dem berührungsempfindlichen Bildschirm angezeigt wird, wobei sich der berührungsempfindliche Bildschirm in einer Vorrichtung befindet, die den Prozessor umfasst, wobei die Aktivierung des zweiten Standorts auf der zweiten Karte (204) eine verringerte Verwendung des berührungsempfindlichen Bildschirms zulässt, indem die Verwendung von Befehlen zur Rückkehr des Bildschirms zu der ersten Karte (102) vermieden wird.

5. Verfahren nach Anspruch 1, wobei die Schnitte ferner umfassen:
Auswählen des Straßenbilds oder eines Winkels zum Betrachten des Straßenbilds, basierend auf benutzerbezogenen Daten des Straßenbilds und einer visuellen Analyse des Straßenbilds.

6. System zum Bereitstellen von Straßenbildern für einen Benutzer, das Folgendes umfasst:
einen Speicher;
einen Prozessor;
einen Bildschirm; und
eine Komponente, die in dem Speicher gespeichert ist, die auf dem Prozessor ausführt, die
eine erste Karte (102) für einen Benutzer auf dem Bildschirm anzeigt, wobei die erste Karte (102) benutzerspezifische Kontextinformationen aufweist, wobei die benutzerspezifischen Kontextinformationen Einträge aus einer Kontaktliste oder einer Favoritenliste des Benutzers umfassen, wobei
die Komponente eine Indikation von dem Benutzer empfängt, dass der Benutzer anfordert, ein Straßenbild eines ersten Standorts, der auf der ersten Karte (102) gezeigt ist, zu sehen,
die Komponente das Straßenbild des ersten Standorts aus einer Vielzahl von Bildern des ersten Standorts auswählt, basierend auf einer visuellen Analyse der Vielzahl von Straßenbildern des ersten Standorts, wobei die visuelle Analyse der Vielzahl von Straßenbildern von der Komponente ausgeführt wird, um mindestens eines aus Okklusionen in den Bildern, einen Grad an Unschärfe in den Bildern und einen Grad an Beleuchtung der Bilder zu identifizieren;
die Komponente das Straßenbild des ersten Standorts zusammen mit einer zweiten Karte (204) auf dem Bildschirm anzeigt, wobei sich die zweite Karte (204) von der ersten Karte (102) unterscheidet,
die Komponente die benutzerspezifischen Kontextinformationen auf der zweiten Karte (204) zeigt, wobei die benutzerspezifischen Kontextinformationen einen zweiten Standort aufweisen,
die Komponente eine Indikation von dem Benutzer empfängt, dass der zweite Standort auf der zweiten Karte (204) aktiviert wurde, und
die Komponente den Bildschirm anpasst, um Straßenbilder von dem zweiten Standort statt des ersten Standorts als Reaktion auf die Indikation zu zeigen.

7. System nach Anspruch 6, wobei die benutzerspezifischen Kontextinformationen Ergebnisse einer Suche umfassen, die von dem Benutzer durchgeführt wird.

8. System nach Anspruch 6, wobei die Indikation, dass der zweite Standort aktiviert wurde, eine Verwendung einer Zeigevorrichtung umfasst, um auf den zweiten Standort auf der zweiten Karte (204) oder auf eine Markierung zu klicken, die dem zweiten Standort auf der zweiten Karte (204) zugeordnet ist.

9. System nach Anspruch 6, wobei der Bildschirm ein berührungsempfindlicher Bildschirm ist, wobei die Indikation, dass der zweite Standort aktiviert wurde, ein Verwenden des berührungsempfindlichen Bildschirms umfasst, um den zweiten Standort oder eine Markierung anzutippen, die dem zweiten Standort zugeordnet ist, wobei die zweite Karte (204) auf dem berührungsempfindlichen Bildschirm angezeigt wird, wobei die Aktivierung des zweiten Standorts auf der zweiten Karte (204) eine verringerte Verwendung des berührungsempfindlichen Bildschirms zulässt, indem die Verwendung von Befehlen zur Rückkehr des Bildschirms zu der ersten Karte (102) vermieden wird.

10. System nach Anspruch 6, wobei die Komponente ferner das Straßenbild oder einen Winkel zum Betrachten des Straßenbilds auswählt, basierend auf benutzerbezogene Daten des Straßenbilds und einer visuellen Analyse des Straßenbilds.

11. Computerlesbares Medium, das ausführbare Befehle speichert, um Straßenbilder für einen Benutzer bereitzustellen, wobei die ausführbaren Befehle, wenn sie von einem Computer ausgeführt werden, den Computer zur Durchführung von Schnitten veranlassen, die Folgendes umfassen:
Anzeigen einer ersten Karte (102) für einen Benutzer auf einem Bildschirm, wobei die erste Karte (102) benutzerspezifische Kontextinformationen aufweist, wobei die benutzerspezifischen Kontextinformationen Einträge aus einer Kontaktliste oder einer Favoritenliste des Benutzers umfassen;
Empfangen einer Indikation von dem Benutzer, dass der Benutzer anfordert, ein Straßenbild eines ersten Standorts, der auf der ersten Karte (102) gezeigt ist, zu sehen;
Auswählen des Straßenbilds des ersten Standorts aus einer Vielzahl von Bildern des ersten Standorts basierend auf einer visuellen Analyse der Vielzahl von Straßenbildern des ersten Standorts, wobei die visuelle Analyse der Vielzahl von Straßenbildern von dem Prozessor ausgeführt wird, um mindestens eines aus Okklusionen in den Bildern, einen Grad an Unschärfe in den Bildern und einen Grad an Beleuchtung der Bilder zu identifizieren;
Anzeigen des Straßenbilds des ersten Standorts zusammen mit einer zweiten Karte (204) auf dem Bildschirm, wobei sich die zweite Karte (204) von der ersten Karte (102) unterscheidet;
Zeigen der benutzerspezifischen Kontextinformationen oder eines Teils der benutzerspezifischen Kontextinformationen auf der zweiten Karte (204);
Empfangen einer Indikation von dem Benutzer, dass der zweite Standort auf der zweiten Karte (204) aktiviert wurde; und
Anpassen des Bildschirms, um Straßenbilder von dem zweiten Standort statt des ersten Standorts als Reaktion auf die Indikation zu zeigen.

12. Computerlesbares Medium nach Anspruch 11, wobei die benutzerspezifischen Kontextinformationen Ergebnisse einer Suche umfassen, die von dem Benutzer durchgeführt wird.

13. Computerlesbares Medium des Anspruchs 11, wobei die Indikation, dass der zweite Standort aktiviert wurde, eine Verwendung einer Zeigevorrichtung umfasst, um auf den zweiten Standort auf der zweiten Karte (204) oder auf eine Markierung zu klicken, die dem zweiten Standort auf der zweiten Karte (204) zugeordnet ist.

14. Computerlesbares Medium nach Anspruch 11, wobei die Indikation, dass der zweite Standort aktiviert wurde, ein Verwenden eines berührungsempfindlichen Bildschirms umfasst, um den zweiten Standort oder eine Markierung anzutippen, die dem zweiten Standort zugeordnet ist, wobei die zweite Karte (204) auf dem berührungsempfindlichen Bildschirm angezeigt wird, wobei sich der berührungsempfindliche Bildschirm in einer Vorrichtung befindet, die den Prozessor umfasst, wobei die Aktivierung des zweiten Standorts auf der zweiten Karte (204) eine verringerte Verwendung des berührungsempfindlichen Bildschirms zulässt, indem die Verwendung von Befehlen zur Rückkehr des Bildschirms zu der ersten Karte (102) vermieden wird.

15. Computerlesbares Medium nach Anspruch 11, wobei die Schnitte ferner umfassen:
Auswählen des Straßenbilds oder eines Winkels zum Betrachten des Straßenbilds, basierend auf benutzerbezogenen Daten des Straßenbilds und einer visuellen Analyse des Straßenbilds.

## Revendications

1. Procédé de fourniture d'images de rues à un utilisateur, comprenant les étapes ci-dessous consistant à :
utiliser un processeur pour mettre en oeuvre des actions comprenant les étapes ci-dessous consistant à :
afficher (410) une première carte (102) à un utilisateur sur un écran d'affichage, ladite première carte (102) incluant des informations de contexte spécifiques à l'utilisateur, dans lequel lesdites informations de contexte spécifiques à l'utilisateur comprennent des éléments provenant d'une liste de contacts ou d'une liste de favoris dudit utilisateur ;
recevoir (418), en provenance de l'utilisateur, une indication selon laquelle ledit utilisateur demande à consulter une image de rue d'un premier emplacement montré sur ladite première carte (102) ;
choisir (422) ladite image de rue du premier emplacement parmi une pluralité d'images du premier emplacement sur la base d'une analyse visuelle de la pluralité d'images de rues du premier emplacement, l'analyse visuelle de la pluralité d'images de rues étant mise en oeuvre par le processeur en vue d'identifier au moins l'un des éléments parmi des occlusions dans les images, un niveau de flou des images et un niveau d'éclairage des images ;
afficher (428) ladite image de rue dudit premier emplacement conjointement avec une seconde carte (204) sur ledit écran d'affichage, ladite seconde carte (204) étant distincte de ladite première carte (102) ;
montrer lesdites informations de contexte spécifiques à l'utilisateur sur ladite seconde carte (204), lesdites informations de contexte spécifiques à l'utilisateur incluant un second emplacement ;
recevoir, en provenance dudit utilisateur, une indication selon laquelle ledit second emplacement a été activé sur ladite seconde carte (204) ; et
modifier ledit écran d'affichage pour montrer des images de rues dudit second emplacement, plutôt que dudit premier emplacement, en réponse à ladite indication.

2. Procédé selon la revendication 1, dans lequel lesdites informations de contexte spécifiques à l'utilisateur comprennent des résultats d'une recherche mise en œuvre par ledit utilisateur.

3. Procédé selon la revendication 1, dans lequel ladite indication selon laquelle ledit second emplacement a été activé comprend l'utilisation d'un dispositif de pointage pour cliquer sur ledit second emplacement sur ladite seconde carte (204), ou sur un marqueur associé audit second emplacement sur ladite seconde carte (204).

4. Procédé selon la revendication 1, dans lequel ladite indication selon laquelle ledit second emplacement a été activé comprend l'utilisation d'un écran tactile pour tapoter sur ledit second emplacement, ou sur un marqueur associé audit second emplacement, ladite seconde carte (204) étant affichée sur ledit écran tactile, ledit écran tactile étant contenu dans un dispositif qui comprend ledit processeur, l'activation dudit second emplacement sur ladite seconde carte (204) permettant une utilisation réduite dudit écran tactile en évitant l'utilisation de commandes pour ramener ledit écran d'affichage à ladite première carte (102).

5. Procédé selon la revendication 1, dans lequel lesdites actions comprennent en outre l'étape ci-dessous consistant à :
choisir ladite image de rue, ou un angle avec lequel visualiser ladite image de rue, sur la base de données, issues de l'utilisateur, de ladite image de rue, et de l'analyse visuelle de ladite image de rue.

6. Système destiné à fournir des images de rues à un utilisateur, comprenant :
une mémoire ;
un processeur ;
un écran d'affichage ; et
un composant qui est stocké dans ladite mémoire, qui s'exécute sur ledit processeur, qui affiche une première carte (102) à un utilisateur sur ledit écran d'affichage, ladite première carte (102) incluant des informations de contexte spécifiques à l'utilisateur, dans lequel lesdites informations de contexte spécifiques à l'utilisateur comprennent des éléments provenant d'une liste de contacts ou d'une liste de favoris dudit utilisateur ;
ledit composant recevant, en provenance de l'utilisateur, une indication selon laquelle ledit utilisateur demande à consulter une image de rue d'un premier emplacement montré sur ladite première carte (102) ;
ledit composant choisissant ladite image de rue du premier emplacement parmi une pluralité d'images du premier emplacement sur la base d'une analyse visuelle de la pluralité d'images de rues du premier emplacement, l'analyse visuelle de la pluralité d'images de rues étant mise en œuvre par le composant en vue d'identifier au moins l'un des éléments parmi des occlusions dans les images, un niveau de flou des images et un niveau d'éclairage des images ;
ledit composant affichant ladite image de rue dudit premier emplacement conjointement avec une seconde carte (204) sur ledit écran d'affichage, ladite seconde carte (204) étant distincte de ladite première carte (102) ;
ledit composant montrant lesdites informations de contexte spécifiques à l'utilisateur sur ladite seconde carte (204), lesdites informations de contexte spécifiques à l'utilisateur incluant un second emplacement ;
ledit composant recevant, en provenance dudit utilisateur, une indication selon laquelle ledit second emplacement a été activé sur ladite seconde carte (204) ; et
ledit composant modifiant ledit écran d'affichage pour montrer des images de rues dudit second emplacement, plutôt que dudit premier emplacement, en réponse à ladite indication.

7. Système selon la revendication 6, dans lequel lesdites informations de contexte spécifiques à l'utilisateur comprennent des résultats d'une recherche mise en œuvre par ledit utilisateur.

8. Système selon la revendication 6, dans lequel ladite indication selon laquelle ledit second emplacement a été activé comprend l'utilisation d'un dispositif de pointage pour cliquer sur ledit second emplacement sur ladite seconde carte (204), ou sur un marqueur associé audit second emplacement sur ladite seconde carte (204).

9. Système selon la revendication 6, dans lequel ledit écran d'affichage est un écran tactile, dans lequel ladite indication selon laquelle ledit second emplacement a été activé comprend l'utilisation dudit écran tactile pour tapoter sur ledit second emplacement, ou sur un marqueur associé audit second emplacement, ladite seconde carte (204) étant affichée sur ledit écran tactile, l'activation dudit second emplacement sur ladite seconde carte (204) permettant une utilisation réduite dudit écran tactile en évitant l'utilisation de commandes pour ramener ledit écran d'affichage à ladite première carte (102).

10. Système selon la revendication 6, dans lequel ledit composant choisit en outre ladite image de rue, ou un angle avec lequel visualiser ladite image de rue, sur la base de données, issues de l'utilisateur, de ladite image de rue, et de l'analyse visuelle de ladite image de rue.

11. Support lisible par ordinateur qui stocke des instructions exécutables pour fournir des images de rues à un utilisateur, les instructions exécutables, lorsqu'elles sont exécutées par un ordinateur, amenant l'ordinateur à mettre en œuvre des actions comprenant les étapes ci-dessous consistant à :
afficher une première carte (102) à un utilisateur sur un écran d'affichage, ladite première carte (102) incluant des informations de contexte spécifiques à l'utilisateur, dans lequel lesdites informations de contexte spécifiques à l'utilisateur comprennent des éléments provenant d'une liste de contacts ou d'une liste de favoris dudit utilisateur ;
recevoir, en provenance de l'utilisateur, une indication selon laquelle ledit utilisateur demande à consulter une image de rue d'un premier emplacement montré sur ladite première carte (102) ;
choisir ladite image de rue du premier emplacement parmi une pluralité d'images du premier emplacement sur la base d'une analyse visuelle de la pluralité d'images de rues du premier emplacement, l'analyse visuelle de la pluralité d'images de rues étant mise en œuvre par le processeur en vue d'identifier au moins l'un des éléments parmi des occlusions dans les images, un niveau de flou des images et un niveau d'éclairage des images ;
afficher ladite image de rue dudit premier emplacement conjointement avec une seconde carte (204) sur ledit écran d'affichage, ladite seconde carte (204) étant distincte de ladite première carte (102) ;
montrer lesdites informations de contexte spécifiques à l'utilisateur, ou une partie des informations de contexte spécifiques à l'utilisateur, sur ladite seconde carte (204) ;
recevoir, en provenance dudit utilisateur, une indication selon laquelle ledit second emplacement a été activé sur ladite seconde carte (204) ; et
modifier ledit écran d'affichage pour montrer des images de rues dudit second emplacement, plutôt que dudit premier emplacement, en réponse à ladite indication.

12. Support lisible par ordinateur selon la revendication 11, dans lequel lesdites informations de contexte spécifiques à l'utilisateur comprennent des résultats d'une recherche mise en œuvre par ledit utilisateur.

13. Support lisible par ordinateur selon la revendication 11, dans lequel ladite indication selon laquelle ledit second emplacement a été activé comprend l'utilisation d'un dispositif de pointage pour cliquer sur ledit second emplacement sur ladite seconde carte (204), ou sur un marqueur associé audit second emplacement sur ladite seconde carte (204).

14. Support lisible par ordinateur selon la revendication 11, dans lequel ladite indication selon laquelle ledit second emplacement a été activé comprend l'utilisation d'un écran tactile pour tapoter sur ledit second emplacement, ou sur un marqueur associé audit second emplacement, ladite seconde carte (204) étant affichée sur ledit écran tactile, ledit écran tactile étant contenu dans un dispositif qui comprend ledit processeur, l'activation dudit second emplacement sur ladite seconde carte (204) permettant une utilisation réduite dudit écran tactile en évitant l'utilisation de commandes pour ramener ledit écran d'affichage à ladite première carte (102).

15. Support lisible par ordinateur selon la revendication 11, dans lequel lesdites actions comprennent en outre l'étape ci-dessous consistant à :
choisir ladite image de rue, ou un angle avec lequel visualiser ladite image de rue, sur la base de données, issues de l'utilisateur, de ladite image de rue, et de l'analyse visuelle de ladite image de rue.
